# EUROPEAN PATENT SPECIFICATION

(11) **EP 2 085 670 B1**
(45) Date of publication and mention of the grant of the patent: **24.08.2011**
(21) Application number: 08171155.8
(22) Date of filing: 10.12.2008
(51) Int. Cl.: F16K 27/06

(54) **By-pass valve**
Bypass-Klappe
Soupape de dérivation

(30) Priority: 31.01.2008 IT MI20080153
(43) Date of publication of application: 05.08.2009
(73) Proprietor: FIMCIM S.P.A., 20121 Milano (MI) (IT)
(72) Inventor: Cimberio, Renzo, 20121 Milano (IT)
(74) Representative: Ponzellini, Gianmarco

(56) References cited:
- BE-A2- 810 819
- DE-A1- 3 029 194
- DE-A1- 3 632 223
- DE-A1- 19 837 012
- DE-C1- 19 847 039
- DE-U1- 29 701 133
- JP-A- 60 014 665
- US-A- 3 330 302
- US-A- 5 558 124

## Description

The present invention relates to a by-pass valve. In particular, the present invention pertains to a valve to be preferably used in air-conditioning systems for opening and closing the fluid connection between a fluid distribution line and a respective user base.

For instance, by-pass valves are generally coupled to respective fan-coils to stop fluid supply to the latter, for the purpose of carrying out servicing operations or more simply for cutting one or more fan-coils out of the air-conditioning system.

Generally, these by-pass valves are coupled to further break members, interposed between the by-pass valve and the respective fan-coil, which are adapted to close the fluid path so as to avoid part of the fluid entering the fan-coil.

In particular, the by-pass valves are provided with a delivery duct and a return duct suitably connected to the fan-coil to enable fluid circulation within said fan-coil.

A further connecting duct extends between the delivery duct and the return duct, which connecting duct is suitable for enabling passage of the fluid directly from the delivery duct to the return duct, the user base connected to the valve being by-passed.

A first type of known valve (among those presently on the market) is provided with a pair of three-way closure members, each of which is disposed at a junction region between the by-pass duct and the respective delivery and return ducts. Each closure member, generally of the ball type, is suitably associated with a command lever, to be manually activated for defining a normal-operation condition in which the connecting duct is stopped up to make the fluid flow through the delivery and return ducts, and a by-pass condition in which the delivery and return ducts are stopped up to make the fluid pass through the connecting duct.

In this way, starting from the normal-operation condition of the fan-coil, the operator can directly act on the command levers for deviating the fluid flow towards the connecting duct, isolating the fan-coil from the remaining part of the air-conditioning system.

However, the above described by-pass valves have important drawbacks, mainly resulting from the presence of the two closure members.

First, it is to be noted that the operator must act on two command levers, which necessarily brings about complexity in the user base cut-off or connection operations. In addition, when the air-conditioning system is working, the two levers must be operated simultaneously, under pain of breaking the fluid passage in the air-conditioning circuit.

In addition, the two closure members define a particular structural complexity of the whole valve, consequently giving rise to disadvantages in terms of mounting of same, production costs, bulkiness and weight.

To obviate the above drawbacks, in a second type of air-conditioning systems, by-pass valves are used that are provided with a single two-way closure member, of spherical shape too, housed in the connecting duct.

In this case, the spherical closure member is housed in a respective seat formed in a junction region of two end sections of the connecting duct. In particular, the connecting duct has two distinct sections, each of them being in fluid communication with a respective delivery or return duct. The sections are joined together close to the centre line of the connecting duct through suitable threaded engagement members, in such a manner as to define, in co-operation, a holding seat for the ball closure member, of a greater transverse section than the section of said ducts.

While this by-pass valve is structurally simpler and therefore lighter in weight and cheaper than the valves provided with two closure members, it however has important drawbacks.

In fact, the engagement members of the joined portion are prone to become progressively looser, thus giving rise to fluid leakage during normal operation of the valve.

It is to be noted in particular that the by-pass valves that, as known, are previously assembled to the respective fluid distribution branches and the respective use bases, are submitted to continuous movements during transport and subsequent installation. These movements result in mechanical stresses at the connecting duct and in particular at the connecting joint.

Therefore, once the air-conditioning water system has been set up, in the by-pass valves the engagement members can become slightly loose, which will result in fluid leakage or malfunction of the ball closure member.

It is also known from document US 5558124 a refrigeration manifold having a body with a first passage extending horizontally through the body and second and third passages extending vertically through the body to form high and low side of the manifold.

Other passages extend through the body from the first passage to the bottom of the manifold body for connection to a vacuum or refrigerating source.

First and second ball valves are disposed in the first passage for selective opening and closing the first passage.

Third and fourth ball valves maybe provided in the fourth and fifth passages which are provided for connection to the vacuum and charging source, respectively.

In this context, it is a technical task of the present invention to make available a by-pass valve that is devoid of the above-mentioned drawbacks.

Within the scope of this technical task, it is an aim of the present invention to propose a by-pass valve that is cheap, structurally simple, of reduced bulkiness and easy and quick assembly.

Another important aim of the invention is to make available a reliable by-pass valve that is able to maintain correct operation also following continuous mechanical stresses.

The foregoing and further aims that will become more apparent in the following of the present description, are substantially achieved by a by-pass valve having the features set out in one or more of the appended claims.

A preferred but not exclusive embodiment of a by-pass valve in accordance with the present invention is now illustrated by way of non-limiting example.

With reference to the accompanying drawings:
- Fig. 1 is a perspective view of a by-pass valve in accordance with the present invention;
- Fig. 2 is a top plan view, in section, of the by-pass valve seen in Fig. 1; and
- Fig. 3 is an elevation side view in section of the by-pass valve seen in Fig. 1.

With reference to the drawings, a by-pass valve in accordance with the present invention has been generally identified by reference numeral 1.

It is to be pointed out that the by-pass valve 1 advantageously applies to air-conditioning systems for breaking fluid distribution to respective user bases, such as fan-coils, for the purpose of carrying out servicing operations or more simply for cutting one or more fan-coils out of the air-conditioning system.

However, valve 1 can be used in any type of hydraulic or pneumatic circuit, in which the possibility of deviating fluid for the purpose of cutting a respective user base out of the circuit is required.

In detail, valve 1 comprises a fluid delivery duct 2 and a respective fluid return duct 3, preferably parallel to each other.

The delivery duct 2 has an inlet 2a and an outlet 2b, adapted to be respectively connected to a fluid admission or supply pipeline and, for instance, to a fan-coil not shown or described in detail as it is not part of the present invention.

Likewise, the return duct 3 too has an inlet 3a and an outlet 3b, to be respectively connected to the fan-coil and a fluid emission or recirculation pipeline.

Preferably, said inlets 3a, 2a and outlets 2b, 3b of the respective ducts 2, 3 have suitable threaded connecting ring nuts 4 not described as of known type and widely used in the specific technical field, to enable valve 1 to be easily coupled to the hydraulic or pneumatic system.

Valve 1 further has a by-pass channel 5, interposed between the delivery duct 2 and the return duct 3 to bring ducts 2, 3 mutually into fluid communication.

In more detail, the extension of the by-pass channel 5 is longitudinal and perpendicular to the extension of said ducts 2, 3, and said channel 5 has a first end 5a associated with the delivery duct 2 and a second end 5b, opposite to the first one, associated with the return duct 3.

In this way, the by-pass channel 5 constitutes a deviation along a fluid inlet/outlet direction perpendicular to the outflow direction in said ducts 2, 3 parallel to each other.

It is also to be pointed out that the by-pass channel 5 is of one piece construction to give the whole valve 1 more stiffness. "Channel of one piece construction" means unitary manufacture of the whole outer structure of the channel, except for the necessary holes/accesses for mounting further elements required for operation of the valve, as shown in the figures.

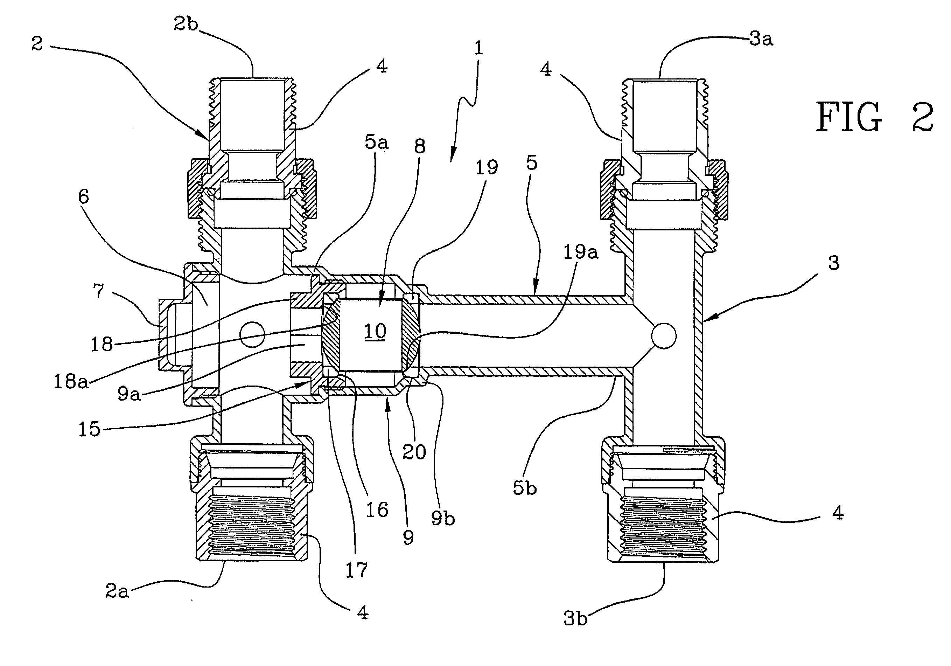

Preferably, ducts 2, 3 and channel 5 are made in one piece, defining a single body that is internally hollow and has a substantially H-shaped conformation (Fig. 2).

Referring particularly to Fig. 2, it is to be noted that at least one of ducts 2, 3 has an access 6 disposed at one of the ends 5a, 5b of the by-pass channel 5.

Preferably, access 6 consists of a cavity made in the delivery duct 2 and such disposed as to face the first end 5a of the by-pass channel 5. This access 6, under normal operating conditions of valve 1, appears to be closed by a respective closing element 7 adapted to avoid fluid escape during passage of said fluid through the delivery duct 2.

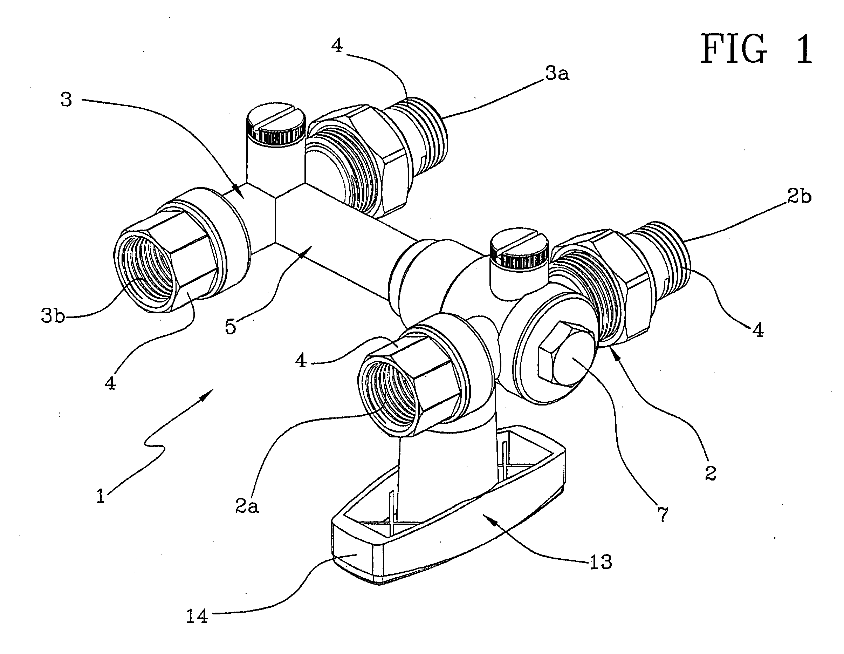

As better shown in Fig. 1, the closing element 7 is preferably made up of a plug to be screwed down in a reversible manner into access 6.

Valve 1 further comprises a ball closure member 8, preferably of the two-way type, housed in a respective seat 9 formed at the by-pass channel 5.

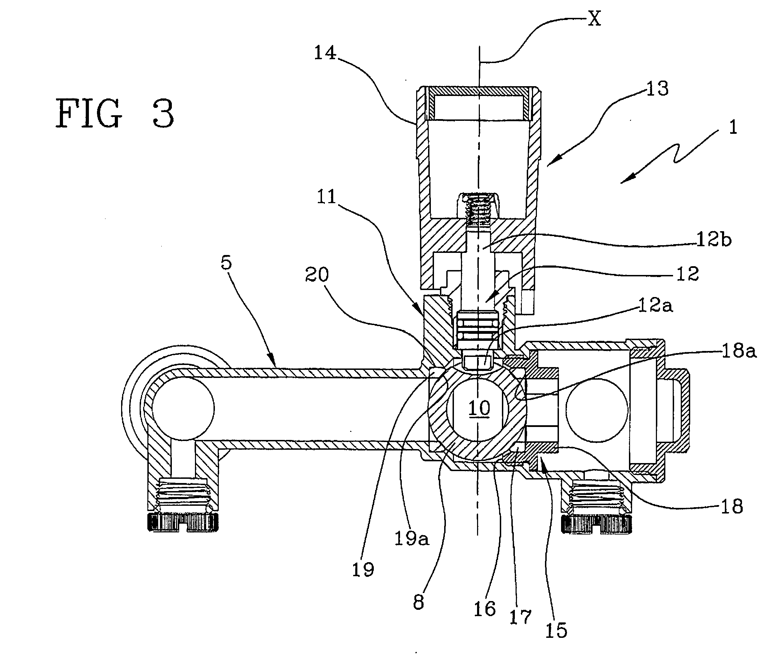

The ball closure member 8 consists of a spherical body, internally provided with a channel 10 for fluid passage. In this manner, the closure member 8 appears to be rotatable about a respective axis "X" perpendicular to the longitudinal extension of channel 5 between at least one first operating condition at which channel 10 allows fluid passage from the delivery duct 2 to the return duct 3, and a second operating condition at which channel 10 is perpendicular to the extension of the by-pass channel 5 (Figs. 2 and 3) to break fluid communication between the two ducts 2, 3.

It is to be noted in particular that the closure member 8, in the respective first operating condition, is such oriented as to arrange the respective channel 10 parallel to the longitudinal extension of the by-pass channel 5. In this manner, the fluid flows through the by-pass channel 5 from the inlet 2a of the delivery duct 2 to the outlet 3b of the return duct 3 in order to bypass a respective user base (fan-coil) coupled to the outlet 2b of the delivery duct 2 and to the inlet 3a of the return duct 3.

Referring particularly to Fig. 2, seat 9 is formed at one of the two ends 5a, 5b of the by-pass channel 5, preferably at the first end 5a. Under this situation, seat 9 is close to the delivery duct 2 and more specifically approaches said access 6.

It is also to be pointed out that seat 9 constitutes a slightly enlarged portion of the by-pass channel 5 defining a transverse section greater than the transverse section of the by-pass channel 5. As above specified, channel 5 appears to be made in one piece and therefore seat 9 too, i.e. the portion of channel 5 (external surface) included between an inlet region 9a of the fluid to the closure member 8 and an outlet region 9b of the fluid from the closure member 8, is made in one piece. In this way, complete interruptions in the by-pass channel 5 are avoided as they could give rise to fluid leakage.

With particular reference to the sectional view in Fig. 3, it is to be noted that seat 9 further has a protrusion 11 of a substantially cylindrical conformation jutting out of the by-pass channel 5. Protrusion 11 is fully hollow to enable passage of an operating member 13 connected to the ball closure member 8 and adapted to move said closure member 8 in the respective operating conditions.

In particular, the operating member 13 comprises a connecting rod 12 extending within the protrusion 11 and provided with a first end 12a in engagement with the ball closure member 8 and a second end 12b projecting externally of protrusion 11. The second end 12b of rod 12 is advantageously associated with a handle 14 also shown in Fig. 1 and adapted to be grasped by an operator for movement of the closure member 8. In this way, by rotating handle 14, and consequently rod 12 too, around a rotation axis "X" parallel to the extension of rod 12, the closure member 8 is switched over for defining either the condition of normal operation of valve 8 or the by-pass or cutting-off condition of the fan-coil.

Also introduced into the by-pass channel 5 is a sealing element 15 in engagement with the closure member 8 to keep the same housed in seat 9.

In more detail, during mounting of valve 1, first the closure member 8 is housed inside seat 9 making the same pass through said access 6. Subsequently, the sealing element 15 is positioned in seat 9, said sealing element being inserted through access 6 until it is engaged within channel 5. Under this situation, a respective rest surface 16 of said element 15 is disposed in contact with the closure member 8 to keep said closure member 8 removably engaged in seat 9 with possibility of rotating only around said axis "X". When mounting has been completed, access 6 is closed using the above described respective closing element 7.

It is to be noted that the rest surface 16 of the sealing element 15 has a substantially annular conformation and extends transversely of the longitudinal extension of the by-pass channel 5.

Preferably, the sealing element 15 that under this situation appears to be interposed between the closure member 8 and access 6, is in engagement at the inside of seat 9 (and in detail with the inner wall of the by-pass channel 5 without breaking the continuity of said channel wall) by mechanical friction fit or by screwing down the same in a threaded portion of said seat 9.

As better shown in the sectional views in Figs. 2 and 3, the sealing element 15 comprises a first annular portion 17 abutting against the outer spherical surface of the closure member 8. This annular portion 17 defines the aforesaid annular rest surface 16 the shape of which matches that of the outer surface of the closure member 8. In addition, the annular portion 17 is preferably made of PTFE (Teflon®) to make it somewhat resistant to abrasion, due to sliding of the closure member 8 on said portion 17.

The sealing element 15 further has a support body 18 to be preferably rigidly engaged with the inner wall of the by-pass duct 5 and having a cavity 18a for housing the first annular portion 17.

Advantageously, the closure member 8, on the opposite side relative to the first annular portion 17, bears on a second annular portion 19, housed in seat 9 as well. The second annular portion 19 too is preferably made of PTFE (Teflon®) and has a respective annular rest surface 19a abutting on the spherical outer surface of the closure member 8 on the opposite side relative to the first annular portion 17.

Preferably, the second annular portion 19 too is inserted in seat 9 and housed in a respective annular groove 20 formed in said seat 9, through access 6. In other words, during mounting of valve 1 and before insertion of the closure member 8 into seat 9, the second annular portion 19 is inserted into channel 5, making it pass through access 6.

Advantageously, the closure member 8 is engaged by the first and second annular portions 17, 19 and is maintained in the respective seat 9, so that it slides on said portions, when switched over between the first and second operating conditions.

The invention achieves the intended purposes.

It is to be pointed out, in fact, that the valve only has one two-way spherical closure member 8 suitable for switching over of valve 1 from the normal-use condition at which the fluid passes through the two ducts 2, 3 and the respective user base, to a by-pass condition at which the user base is cut off and the fluid is deviated through the by-pass channel 5.

Advantageously, valve 1 is of simple structure and therefore lighter-in-weight and cheaper than valves provided with two closure members.

It is also to be noted that channel 5 is made of one piece construction with ducts 2, 3 and therefore it appears to be very stiff and reliable, the possibility of fluid leakage being excluded even following continuous movements and torsional stresses between the two ducts 2, 3.

A further advantage is represented by the easy mounting of the closure member 8 through access 6, said access 6 representing an insertion opening for the closure member 8 and all components co-operating with said closure member 8 during movement thereof. This access 6 allows channel 5 and ducts 2, 3 to be maintained unitary, without being obliged to divide channel 5 into separated parts to be joined following mounting of the closure member.

## Claims

1. A by-pass valve comprising a fluid delivery duct (2), a return duct (3) for said fluid, a by-pass channel (5) interposed between the delivery duct (2) and the return duct (3) to bring the ducts (2, 3) mutually into fluid communication, and a ball closure member (8) housed in a respective seat (9) formed at said by-pass channel (5) and suitable to be switched over at least between a first operating condition at which it allows fluid passage from the delivery duct (2) to the return duct (3) and a second operating condition at which it breaks the fluid communication between said ducts (2, 3);
**characterised in that** it further comprises a sealing element (15) insertable in the by-pass channel (5) and in engagement with the closure member (8) to maintain said closure member (8) housed inside the seat (9); at least the portion of said by-pass channel (5) included between a fluid inlet region (9a) to the closure member (8) and a fluid outlet region (9b) from the closure member (8) being formed in a single body.

2. A valve as claimed in claim 1, **characterised in that** said by-pass channel (5) comprises a first end (5a) associated with said delivery duct (2) and a second end (5b) opposite to the first one (5a) and associated with said return duct (3); said seat (9) being formed at one of said ends (5a, 5b) of the by-pass channel (5).

3. A valve as claimed in anyone of the preceding claims, **characterised in that** said sealing element (15) defines a rest surface (16) for said closure member (8) having an extension transverse to the longitudinal extension of the by-pass channel (5).

4. A valve as claimed in the preceding claim, **characterised in that** said sealing element (15) comprises a first annular portion (17) in abutment on a spherical outer surface of the closure member (8), and a support body (18) to be preferably rigidly engaged with an inner wall of the by-pass duct (5) and having a housing cavity (18a) for said first annular portion (17).

5. A valve as claimed in the preceding claim, **characterised in that** it further comprises a second annular portion (19) housed in said seat (9) and in abutment on the spherical outer surface of the closure member (8) on the side opposite to said first annular portion (17); said closure member (8) sliding on the first and second annular portions (17, 19) during is switching over between the first and second operating conditions.

6. A valve as claimed in anyone of the preceding claims, **characterised in that** said by-pass channel (5) is formed in a single body.

7. A valve as claimed in anyone of the preceding claims, **characterised in that** at least one of said delivery and return ducts (2, 3) comprises at least one access (6), said sealing element (15) being interposed between the closure member (8) and the access (6).

8. A valve as claimed in the preceding claim when depending on claim 2, **characterised in that** said sealing element (15) is inserted in the by-pass channel (5) through the access (6), said access (6) being disposed at the end (5a; 5b) of the by-pass channel (5) provided with said seat (9).

9. A valve as claimed in the preceding claim, **characterised in that** it further comprises a closing element (7) engaged with said access (6) to stop up the same during passage of fluid in the valve (1).

10. A valve as claimed in anyone of the preceding claims, **characterised in that** said ducts (2, 3) and said by-pass channel (5) are formed in a single body.

11. A valve as claimed in anyone of the preceding claims, **characterised in that** each duct (2, 3) comprises an inlet (2a, 3a) and an outlet (2b, 3b), said closure member (8) in the first operating condition allowing fluid passage through the by-pass channel (5) from the inlet (2a) of the delivery duct (2) to the outlet (3b) of the return duct (3).

12. A valve as claimed in claim 11, **characterised in that** said ducts (2, 3) have respective fluid outflow directions preferably parallel to each other and transverse to the fluid passage direction in said by-pass channel (5).

13. A valve as claimed in anyone of the preceding claims, **characterised in that** it further comprises an operating member (13) connected to said ball closure member (8) and protruding from said seat (9), to move the closure member (8) between the respective operating conditions.

14. A by-pass valve as claimed in claim 1 for air-conditioning systems, comprising:
- a delivery duct (2) to be connected to a fan-coil to supply the latter with a fluid;
- a return duct (3) to be connected to said fan-coil to cause recirculation of the fluid coming out of the fan-coil;
- a by-pass channel (5) interposed between the delivery duct (2) and the return duct (3) to bring the ducts mutually into fluid communication and by-pass the fan-coil; and
- a ball closure member (8) housed in a respective seat (9) formed at said by-pass channel (5) and suitable to be switched over between a first operating condition at which it allows fluid passage from the delivery duct (2) to the return duct (3) to prevent fluid passage in said fan-coil, and a second operating condition at which it breaks the fluid communication between said ducts (2, 3);
**characterised in that** it further comprises a sealing element (15) insertable in the by-pass channel (5) and in engagement with the closure member (8) to maintain said closure member (8) housed inside the seat (9); at least one of said delivery and return ducts (2, 3) comprising at least one access (6), said sealing element (15) being interposed between the closure member (8) and the access (6) and being inserted in the by-pass duct (5) through said access (6); said sealing element (15) defining a rest surface (16) for said closure member (8), having an extension transverse to the longitudinal extension of the by-pass channel (5); and said by-pass channel (5) being formed in a single body.

15. A method of making a by-pass valve, comprising the following steps:
- providing a delivery duct (2), a return duct (3) and a by-pass channel (5) interposed between the fluid delivery duct and the fluid return duct and made in one piece; the by-pass channel (5) bringing said ducts (2, 3) into mutual communication, at least one of said ducts (2, 3) having an access (6), the by-pass channel (5) defining a seat (9);
- inserting a ball closure member (8) through said access (6) until positioning it in said seat (9);
- inserting a sealing element (15) through said access (6) and engaging the closure member (8) in order to maintain it housed in said seat, the closure member being suitable to be switched over between at least one first operating condition at which it allows fluid passage from the delivery duct (2) to the return duct (3), and a second operating condition at which it stops fluid communication between said ducts (2, 3).

## Patentansprüche

1. Bypassventil umfassend eine Fluidförderleitung (2), eine Rücklaufleitung (3) für das benannte Fluid, einen Bypasskanal (5), der zwischen der Förderleitung (2) und der Rücklaufleitung (3) liegt, um die Leitungen (2, 3) in Fluidkommunikation miteinander zu setzen, und einen Kugelverschluß (8), der in einem entsprechenden Sitz (9) aufgenommen ist, der am benannten Bypasskanal (5) geformt ist und zur Umschaltung mindestens zwischen einer ersten Betriebsbedingung, bei der er den Fluiddurchgang von der Förderleitung (2) zur Rücklaufleitung (3) erlaubt, und einer zweiten Betriebsbedingung, bei der er die Fluidkommunikation zwischen den benannten Leitungen (2, 3) unterbricht, vorgesehen ist;
**dadurch gekennzeichnet, daß** es ein Dichtelement (15) weiter umfasst, das in den Bypasskanal (5) einsetzbar ist und mit dem Verschluß (8) eingreift, um den benannten Verschluß (8) im Sitz (9) aufrechtzuerhalten; wobei mindestens der Abschnitt des benannten Bypasskanals (5) zwischen einem Fluideingangsbereich (9a) in den Verschluß (8) und einem Fluidausgangsbereich (9b) aus dem Verschluß (8) einstückig geformt ist.

2. Ventil nach Anspruch 1, **dadurch gekennzeichnet, daß** der benannte Bypasskanal (5) ein erstes Ende (5a), das mit der benannten Förderleitung (2) verbunden ist, und ein zweites Ende (5b), das dem ersten (5a) entgegengesetzt ist und mit der benannten Rücklaufleitung (3) verbunden ist, umfasst; wobei der benannte Sitz (9) an einem der benannten Enden (5a, 5b) des Bypasskanals (5) geformt ist.

3. Ventil nach irgendeinem der vorherigen Ansprüche, **dadurch gekennzeichnet, daß** das benannte Dichtelement (15) eine Stützfläche (16) für den benannten Verschluß (8) definiert, die eine Entwicklung quer zur Längsentwicklung des Bypasskanals (5) aufweist.

4. Ventil nach dem vorherigen Anspruch, **dadurch gekennzeichnet, daß** das benannte Dichtelement (15) einen ersten Ringabschnitt (17), der an einer Kugelaußenfläche des Verschlusses (8) anliegt, und einen Tragkörper (18), der bevorzugt mit einer Innenwand der Bypassleitung (5) steif eingreifen soll und eine Aufnahmeaussparung (18a) für den ersten Ringabschnitt (17) besitzt, umfasst.

5. Ventil nach dem vorherigen Anspruch, **dadurch gekennzeichnet, daß** es einen zweiten Ringabschnitt (19), der im benannten Sitz (9) aufgenommen ist und an der Kugelaußenfläche des Verschlusses (8) an der dem ersten Ringabschnitt (17) entgegengesetzten Seite
anliegt, weiter umfasst; wobei der benannte Verschluß (8) am ersten und am zweiten Ringabschnitt (17, 19) während dessen Umschaltung zwischen der ersten und der zweiten Betriebsbedingung gleitet.

6. Ventil nach irgendeinem der vorherigen Ansprüche, **dadurch gekennzeichnet, daß** der benannte Bypasskanal (5) einstückig geformt ist.

7. Ventil nach irgendeinem der vorherigen Ansprüche, **dadurch gekennzeichnet, daß** mindestens eine der benannten Förder- und Rücklaufleitung (2, 3) mindestens einen Zugang (6) umfasst, wobei das benannte Dichtelement (15) zwischen dem Verschluß (8) und dem Zugang (6) liegt.

8. Ventil nach dem vorherigen Anspruch, wenn er vom Anspruch 2 abhängt, **dadurch gekennzeichnet, daß** das benannte Dichtelement (15) in den Bypasskanal (5) durch den Zugang (6) eingesetzt wird, wobei der benannte Zugang (6) an dem mit dem benannten Sitz (9) ausgestatteten Ende (5a; 5b) des Bypasskanals (15) angeordnet ist.

9. Ventil nach dem vorherigen Anspruch, **dadurch gekennzeichnet, daß** es ein Absperrelement (7) weiter umfasst, das mit dem benannten Zugang (6) eingreift, um diesen während des Fluiddurchgangs im Ventil (1) abzusperren.

10. Ventil nach irgendeinem der vorherigen Ansprüche, **dadurch gekennzeichnet, daß** die benannten Leitungen (2, 3) und der benannte Bypasskanal (5) einstückig geformt sind.

11. Ventil nach irgendeinem der vorherigen Ansprüche, **dadurch gekennzeichnet, daß** jede Leitung (2, 3) einen Eingang (2a, 3a) und einen Ausgang (2b, 3b) umfasst, wobei der benannte Verschluß (8) in der ersten Betriebsbedingung den Fluiddurchgang durch den Bypasskanal (5) vom Eingang (2a) der Förderleitung (2) zum Ausgang (3b) der Rücklaufleitung (3) erlaubt.

12. Ventil nach Anspruch 11, **dadurch gekennzeichnet, daß** die Leitungen (2, 3) entsprechende Fluidabflussbereiche besitzen, die bevorzugt parallel zueinander und quer zur Fluiddurchgangsrichtung im benannten Bypasskanal (5) verlaufen.

13. Ventil nach irgendeinem der vorherigen Ansprüche, **dadurch gekennzeichnet, daß** es eine Betätigungseinrichtung (13) weiter umfasst, die mit dem benannten Kugelverschluß (8) verbunden ist und vom benannten Sitz (9) vorsteht, um den Verschluß (8) zwischen den entsprechenden Betriebsbedingungen umzuschalten.

14. Bypassventil nach Anspruch 1 für Klimaanlagen, umfassend:
- eine Förderleitung (2) zur Verbindung mit einem Gebläsekonvektor, um den letzteren mit einem Fluid zu versorgen;
- eine Rücklaufleitung (3) zur Verbindung mit das oben genannt Gebläsekonvektor, um den Umlauf des Fluids aus dem Gebläsekonvektor zu verursachen;
- einen Bypasskanal (5), der zwischen der Förderleitung (2) und der Rücklaufleitung (3) liegt, um die Leitungen in Fluidkommunikation miteinander zu setzen und den Gebläsekonvektor zu bypassieren; und
- einen Kugelverschluß (8), der in einem entsprechenden Sitz (9) aufgenommen ist, der am benannten Bypasskanal (5) geformt ist und zur Umschaltung mindestens zwischen einer ersten Betriebsbedingung, bei der er den Fluiddurchgang von der Förderleitung (2) zur Rücklaufleitung (3) erlaubt, um den Fluiddurchgang im benannten Gebläsekonvektor zu vermeiden, und einer zweiten Betriebsbedingung, bei der er die Fluidkommunikation zwischen den benannten Leitungen (2, 3) unterbricht, vorgesehen ist;
**dadurch gekennzeichnet, daß** es ein Dichtelement (15) weiter umfasst, das in den Bypasskanal (5) einsetzbar ist und mit dem Verschluß (8) eingreift, um den benannten Verschluß (8) im Sitz (9) aufrechtzuerhalten; wobei mindestens einer der benannten Förder- und
Rücklaufleitung (2, 3) mindestens einen Zugang (6) umfasst, wobei das benannte Dichtelement (15) zwischen dem Verschluß (8) und dem Zugang (6) liegt und in die Bypassleitung (5) durch den benannten Zugang (6) eingesetzt wird; wobei das benannte Dichtelement (15) eine Stützfläche (16) für den benannten Verschluß (8) definiert, die eine Entwicklung quer zur Längsentwicklung des Bypasskanals (5) besitzt; und wobei der benannte Bypasskanal (5) einstückig geformt ist.

15. Verfahren zur Herstellung eines Bypassventils, umfassend die folgenden Schritte:
- Bereitstellen einer Förderleitung (2), einer Rücklaufleitung (3) und eines Bypasskanals (5), der zwischen der Fluidförderleitung und der Fluidrücklaufleitung liegt und einstückig gefertigt ist; wobei der Bypasskanal (5) die benannten Leitungen (2, 3) in Kommunikation miteinander setzt, wobei mindestens eine der benannten Leitungen (2, 3) einen Zugang (6) besitzt, wobei der Bypasskanal (5) einen Sitz (9) definiert;
- Einsetzen eines Kugelverschlusses (8) durch den benannten Zugang (6) bis zu dessen Positionieren im benannten Sitz (9);
- Einsetzen eines Dichtelementes (15) durch den benannten Zugang (6) und Eingreifen des Verschlusses (8), um ihn im benannten Sitz aufrechtzuerhalten, wobei der Verschluß zur Umschaltung zwischen mindestens einer ersten Betriebsbedingung, bei der er den Fluiddurchgang von der Förderleitung (2) zur Rücklaufleitung (3) erlaubt, und einer zweiten Betriebsbedingung, bei der er die Fluidkommunikation zwischen den benannten Leitungen (2, 3) unterbricht, vorgesehen ist.

## Revendications

1. Soupape de bypass comprenant un conduit d'alimentation de fluide (2), un conduit de retour (3) pour ledit fluide, un canal de bypass (5) placé entre le conduit d'alimentation (2) et le conduit de retour (3) apte à mettre en communication réciproque de fluide les conduits (2, 3), et un dispositif de fermeture à sphère (8) logé dans un siège (9) respectif formé sur ledit canal de bypass (5) et commutable au moins entre une première condition opérationnelle dans laquelle il permet le passage de fluide du conduit d'alimentation (2) au conduit de retour (3) et une deuxième condition opérationnelle dans laquelle il interrompt la communication de fluide entre lesdits conduits (2, 3); **caractérisée en ce qu'**elle comprend en outre un élément d'étanchéité (15) insérable dans le canal de bypass (5) et engagé avec le dispositif de fermeture (8) pour maintenir ledit dispositif de fermeture (8) logé dans le siège (9); au moins la portion dudit canal de bypass (5) comprise entre une région d'entréee de fluide (9a) dans le dispositif de fermeture (8) et une région de sortie de fluide (9b) du dispositif de fermeture (8) étant formée en corps unique.

2. Soupape selon la revendication 1, **caractérisée en ce que** ledit canal de bypass (5) comprend une première extrémité (5a) associée audit conduit d'alimentation (2) et une deuxième extrémité (5b) opposée à la première (5a) et associée audit conduit de retour (3); ledit siège (9) étant formé sur une desdites extrémités (5a, 5b) du canal de bypass (5).

3. Soupape selon une quelconque des revendications précédentes, **caractérisée en ce que** ledit élément d'étanchéité (15) définit une surface d'appui (16) pour ledit dispositif de fermeture (8) ayant une extension transversale à l'extension longitudinale du canal de bypass (5).

4. Soupape selon la revendication précédente, **caractérisée en ce que** ledit élément d'étanchéité (15) comprend une première portion annulaire (17) en butée contre une surface extérieure sphérique du dispositif de fermeture (8), et un corps de support (18) à engager de façon préférablement rigide avec une paroi intérieure du conduit de bypass (5) et ayant une cavité de logement (18a) pour ladite première portion annulaire (17).

5. Soupape selon la revendication précédente, **caractérisée en ce qu'**elle comprend en outre une deuxième portion annulaire (19) logée dans ledit siège (9) et en butée contre la surface extérieure sphérique du dispositif de fermeture (8) sur le côté opposé à ladite première portion annulaire (17); ledit dispositif de fermeture (8) glissant sur la première et la deuxième portion annulaire (17, 19) pendant son passage entre la première et la deuxième condition opérationnelle.

6. Soupape selon une quelconque des revendications précédentes, **caractérisée en ce que** ledit canal de bypass (5) est formé en corps unique.

7. Soupape selon une quelconque des revendications précédentes, **caractérisée en ce que** au moins un desdits conduits d'alimentation et de retour (2, 3) comprend au moins un accès (6), ledit élément d'étanchéité (15) étant placé entre le dispositif de fermeture (8) et l'accès (6).

8. Soupape selon la revendication précédente en tant que subordonnée de la revendication 2, **caractérisée en ce que** ledit élément d'étanchéité (15) est introduit dans le canal de bypass (5) à travers l'accès (6), ledit accès (6) étant placé à l'extrémité (5a; 5b) du canal de bypass (5) munie dudit siège (9).

9. Soupape selon la revendication précédente, **caractérisée en ce qu'**elle comprend en outre un élément de fermeture (7) engagé avec ledit accès (6) pour bloquer ce dernier pendant le passage de fluide dans la soupape (1)

10. Soupape selon une quelconque des revendications précédentes, **caractérisée en ce que** lesdits conduits (2, 3) et ledit canal de bypass (5) sont formés en corps unique.

11. Soupape selon une quelconque des revendications précédentes, **caractérisée en ce que** chaque conduit (2, 3) comprend une entrée (2a, 3a) et une sortie (2b, 3b), ledit dispositif de fermeture (8) dans la première condition opérationnelle permettant le passage de fluide à travers le canal de bypass (5) de l'entrée (2a) du conduit d'alimentation (2) à la sortie (3b) du conduit de retour (3).

12. Soupape selon la revendication 11, **caractérisée en ce que** lesdits conduits (2, 3) ont des directions de sortie respectives préférablement parallèles l'une à l'autre et transversales à la direction de passage de fluide dans ledit canal de bypass (5).

13. Soupape selon une quelconque des revendications précédentes, **caractérisée en ce qu'**elle comprend en outre un dispositif de commande (13) relié audit dispositif de fermeture sphérique (8) et saillant dudit siège (9), pour déplacer le dispositif de fermeture (8) entre les conditions opérationnelles respectives.

14. Soupape de bypass selon la revendication 1 pour systèmes de conditionnement d'air, comprenant:
- un conduit d'alimentation (2) apte à être relié à un convecteur à ventilation pour alimenter ce dernier avec un fluide;
- un conduit de retour (3) apte à être relié audit convecteur à ventilation pour permettre la recirculation du fluide sortant du convecteur à ventilation;
- un canal de bypass (5) placé entre le conduit d'alimentation (2) et le conduit de retour (3) pour mettre en communication réciproque de fluide les conduits et bypasser le convecteur à ventilation; et
- un dispositif de fermeture à sphère (8) logé dans un siège (9) respectif formé sur ledit canal de bypass (5) et commutable au moins entre une première condition opérationnelle dans laquelle il permet le passage de fluide du conduit d'alimentation (2) au conduit de retour (3) pour empêcher le passage de fluide dans ledit convecteur à ventilation, et une deuxième condition opérationnelle dans laquelle il interrompt la communication de fluide entre lesdits conduits (2, 3); **caractérisée en ce qu'**elle comprend en outre un élément d'étanchéité (15) insérable dans le canal de bypass (5) et engagé avec le dispositif de fermeture (8) pour maintenir ledit dispositif de fermeture (8) logé dans le siège (9); au moins un desdits conduits d'alimentation et de retour (2, 3) comprenant au moins un accès (6), ledit élément d'étanchéité (15) étant placé entre le dispositif de fermeture (8) et l'accès (6) et étant introduit dans le canal de bypass (5) à travers ledit accès (6); ledit élément d'étanchéité définissant une surface d'appui (16) pour ledit dispositif de fermeture (8), ayant une extension transversale à l'extension longitudinale du canal de bypass (5); et ledit canal de bypass (5) étant formé en corps unique.

15. Méthode pour produire une soupape de bypass, comprenant les étapes suivantes:
- préparer un conduit d'alimentation (2), un conduit de retour (3) et un canal de bypass (5) placé entre le conduit d'alimentation de fluide et le conduit de retour de fluide et fabriqué dans une seule pièce; le canal de bypass (5) mettant lesdits conduits (2, 3) en communication réciproque, au moins un desdits conduits (2, 3) ayant un accès (6), le canal de bypass (5) définissant un siège (9);
- introduire un dispositif de fermeture à sphère (8) à travers ledit accès (6) jusqu'à son positionnement dans ledit siège (9);
- introduire un élément d'étanchéité (15) à travers ledit accès (6) et engager le dispositif de fermeture (8) pour le maintenir logé dans ledit siège, le dispositif de fermeture étant apte à changer entre au moins une première condition opérationnelle dans laquelle il permet le passage de fluide du conduit d'alimentation (2) au conduit de retour (3) et une deuxième condition opérationnelle dans laquelle il interrompt la communication de fluide entre lesdits conduits (2, 3).
